# EUROPEAN PATENT SPECIFICATION

(11) **EP 3 802 235 B1**
(45) Date of publication and mention of the grant of the patent: **30.07.2025**
(21) Application number: 19730684.8
(22) Date of filing: 20.05.2019
(51) Int. Cl.: B60R 25/24, H02J 50/10

(54) **PASSIVE ENTRY PASSIVE START DEVICE PROVIDING WIRELESS CHARGER RESOURCES AND METHOD TO OPERATE SUCH A DEVICE**
SCHLÜSSELLOSES ZUGANGS- UND STARTSYSTEM MIT BEREITSTELLUNG VON DRAHTLOSLADERESSOURCEN UND VERFAHREN ZUM BETRIEB EINER DERARTIGEN VORRICHTUNG
DISPOSITIF DE DÉMARRAGE PASSIF À ENTRÉE PASSIVE FOURNISSANT DES RESSOURCES DE CHARGEUR SANS FIL ET PROCÉDÉ DE FONCTIONNEMENT D'UN TEL DISPOSITIF

(30) Priority: 24.05.2018 CN 201810509825; 20.12.2018 CN 201811563520
(43) Date of publication of application: 14.04.2021
(73) Proprietor: Valeo Comfort and Driving Assistance, 94000 Créteil (FR)
(72) Inventor: SCHULER, Stéphane, Shenzhen, Guangdong 518128 (CN); MOTZ, Joel, 94046 Créteil CEDEX (FR)
(74) Representative: Delaval, Guillaume Laurent
(86) International application number: PCT/EP2019/062971
(87) International publication number: WO 2019/224152

(56) References cited:
- EP-A1- 3 293 706
- WO-A1-2017/153164
- DE-A1- 4 434 571
- FR-A1- 2 981 823
- JP-A- 2013 070 545
- US-A1- 2014 103 865
- US-A1- 2015 015 198
- US-A1- 2015 380 975

## Description

### TECHNICAL FIELD

The invention is related to the passive entry passive start devices. More particularly, the invention concerns a passive entry passive start device providing wireless charger resources. The invention also concerns a method to operate such a device.

### BACKGROUND ART

US 2015/380975 discloses an electronic device for controlling access to a vehicle using a portable identifier and providing power to a portable device inside that vehicle, said electronic device comprising means controlling an external low frequency antenna, a radio receiver or a radio transceiver, a wireless charger comprising at least one coil, said electronic device being configured to operate in at least two modes:
- a first mode where the electronic device is configured to send a high-power signal to a portable identifier using the external low frequency antenna and to exchange data with said portable identifier terminal using the radio receiver and the external low frequency antenna or the transceiver;
- a second mode where the electronic device is configured to provide power to the portable device using a high-power signal through the wireless charger.

Vehicles, in particular cars, are usually equipped with an electronic system that allows a user to unlock the said vehicle remotely. In order to allow such a remote control, vehicles are often equipped with a system called PEPS for Passive Entry Passive Start. Such a system uses a low-frequency signal to locate a portable identifier (for instance a smart key). Once the portable identifier is nearby the vehicle, it can exchange data with said vehicle using a RF signal, for instance a Bluetooth^{®} connection. On the other hand, thanks to the market rise of smartphones, vehicle also provide ways to interact, once in the car with such portable devices. One interaction of interest is the one that consists in charging the battery of a portable device wirelessly, using a wireless charger located inside the vehicle. However, such a wireless charging system uses frequencies that are close to the one used for the PEPS functionality and can generate low frequency (LF) interferences that make impossible to provide the two services at the same time.

Therefore, there is a need for a system than can allow the use of both technologies while avoiding low frequency (LF) interferences between the two. Managing this low frequency (LF) interference implies a communication between the PEPS module and the Wireless charging transmitter. The priority being given to the PEPS functions, the charging process is to be stopped for the time needed for the PEPS function to be executed. Usually PEPS requests are to be met with a stringent timing for a prompt response time making the systems challenging to specify and design accordingly.

### DISCLOSURE OF THE INVENTION

The invention solves the above problem by proposing an electronic device according to claim 1, that implements both functionalities avoiding any system communication needs and, in some embodiments, embeds a central interior antenna. This is done by using two or three different working modes, each mode having its own modulation and demodulation protocols and its own low frequency (LF) power supply type (high or low power). Furthermore, by using a unique electronic component for emitting signal in all those modes, low frequency (LF) interferences are avoided, only one mode being active at a time.

A first aspect of the invention relates to an electronic device for controlling access to a vehicle using a portable identifier and providing power to a portable device inside that vehicle, said electronic device comprising means for controlling a plurality of external low frequency antennas, a radio receiver or a radio transceiver, a wireless charger comprising at least one coil, said electronic device being configured to operate in at least two mutually exclusive modes. When operating in a first mode, the electronic device is configured to send a high-power signal to a portable identifier using the plurality of external low frequency antennas and to exchange data with said portable identifier terminal using the radio receiver and the external low frequency antenna or the transceiver. When operating in a second mode, the electronic device is configured to detect a portable device placed nearby the wireless charger, to exchange data with the portable device and to provide power to the portable device using a high-power signal through the wireless charger.

By using two mutually exclusive modes, the electronic device insures that no low frequency (LF) interference occurs between the PEPS functionalities and the wireless charging one. Furthermore, the devices being able to provide both functionalities, it is possible to use electronic component common for both and therefore reduce the complexity of the underlying electronics. For instance, the same antenna controller can be used for the PEPS and for the Wireless charging. This simplification also leads to a simplification by integration of the electronic device according to a first aspect of the invention in the vehicle (e.g. less or simpler connectors or fixtures).

In an embodiment, the electronic device is configured to operate in a third mode in which the electronic device is configured to provide a low-frequency low-power signal to a portable identifier in order to provide power to the portable identifier and then exchange data with said portable identifier. This third mode is a backup mode that is convenient when the battery of the portable identifier is depleted, and when power needs to be provided for said portable identifier to operate.

In an embodiment, the electronic device comprises means for controlling an external backup antenna, the low-frequency low-power signal being provided to the portable identifier using an external backup antenna.

In an embodiment, the low-frequency low-power signal is provided to the portable identifier using one coil of the wireless charger.

In an embodiment, the electronic device comprises a central interior antenna, said electronic device being configured to use the central antenna in combination with the external low frequency antennas when in first mode; and to operate in a third modes where the electronic device is configured to detect a portable identifier placed nearby the central interior antenna, to exchange data with the portable identifier and to provide power to the portable identifier using a low power signal through the central interior antenna.

Therefore, in a passive entry passive start system including an electronic device according to the first aspect of the invention, the central interior antenna is integrated inside the electronic device.

The fact that the central interior antenna is integrated in the electronic device means that the electronic device not only provides means for charging a portable device using the wireless charger, but it also provides a central interior antenna for PEPS functions. Such an embedded central interior antenna suppresses the need to place an external low frequency antenna that is usually located inside the dashboard. Furthermore, the central interior antenna can also be used as a backup antenna. Since the central interior antenna is embedded inside the electronic device, it reduces the needs in connections making the integration of the PEPS system inside a vehicle easier.

In an embodiment, when the electronic device is in the first mode or the third mode, the electronic device is configured to send and/or receive signals using a shift keying modulation. It ensures that standard protocol can be used and that the security of the radio frequency connections is provided.

In an embodiment, when the electronic device is in the third mode, the electronic device is configured to send data to the portable device using an ASK modulation and to receive data from the portable device using an AM modulation.

In an embodiment, when the electronic device is in the second mode, the electronic device is configured to send data to the portable device using a FSK modulation and to receive data from the portable device using an amplitude modulation. This configuration ensures that the electronic device is compatible with the Wireless Power Consortium QI standard commonly used for wireless charging.

In an embodiment, the electronic device comprises a low-frequency antenna controller and a H-bridge demultiplexer, said H-bridge demultiplexer being connected to the low-frequency antenna controller and configured to connect the low-frequency antenna controller to the plurality of external low frequency antennas and central interior antenna when the electronic device is in the first mode and to connect the low-frequency antenna controller to one of the coil of the wireless charger when the electronic device is in the second mode.

In this configuration, it is possible to use the same low-frequency antenna controller for both the external low frequency antenna used to provide PEPS, the built-in central interior antenna and the wireless charger used to provide wireless charging capabilities. It therefore reduces redundant needs and insures that no interferences occur between each functionalities.

A second aspect of the invention relates to a passive entry passive start system comprising a plurality of external low frequency antennas and an electronic device according to a first aspect of the invention, said electronic device being connected to the plurality of external low frequency antenna.

In an embodiment, the passive entry passive start system comprises an external backup antenna and the electronic device is connected to said external backup antenna.

A third aspect of the invention concerns a method according to claim 10, for operating an electronic device according to a first aspect of the invention or a passive entry passive start system according to the second aspect of the invention comprising:
- a first step of switching the electronic device in the first mode in order to detect and exchange data with a portable identifier;
- a second step of authenticating the portable identifier;
- when the portable identifier is positively authenticated, a third step of switching the electronic device into the second mode.

In an embodiment, the method further comprises, when communication with the portable identifier is not possible in the first mode, a step of switching the electronic device into the third mode.

A fourth aspect of the invention relates to a computer program comprising instructions to cause the electronic device according to the first aspect of the invention or a passive entry passive start system according to the second aspect of the invention to execute the steps of the method according to a third aspect of the invention.

A fifth aspect of the invention relates to a computer-readable medium having stored thereon the computer program according to a fourth aspect of the invention.

### BRIEF DESCRIPTION OF THE DRAWINGS

- Figure 1 illustrates a schematic representation of a device according to a first aspect of the invention.
- Figure 2 illustrates a schematic representation of the configuration corresponding to the first mode.
- Figure 3 illustrates a schematic representation of the configuration corresponding to the second mode.
- Figure 4 illustrates a schematic representation of the configuration corresponding to the third mode when no backup antenna is used.
- Figure 5 illustrates a schematic representation of the configuration corresponding to the third mode when an external backup antenna is used.
- Figure 6 illustrates a schematic representation of a device according to a first aspect of the invention.
- Figure 7 illustrates a schematic representation of the configuration corresponding to the first mode when a built-in central interior antenna is used.
- Figure 8 illustrates a schematic representation of the configuration corresponding to the second mode when a built-in central interior antenna is used.
- Figure 9 illustrates a schematic representation of the configuration corresponding to the third mode when a built-in central interior antenna is used.
- Figure 10 illustrate a logogram of a method according to a third aspect of the invention.

### EMBODIMENTS OF THE INVENTION

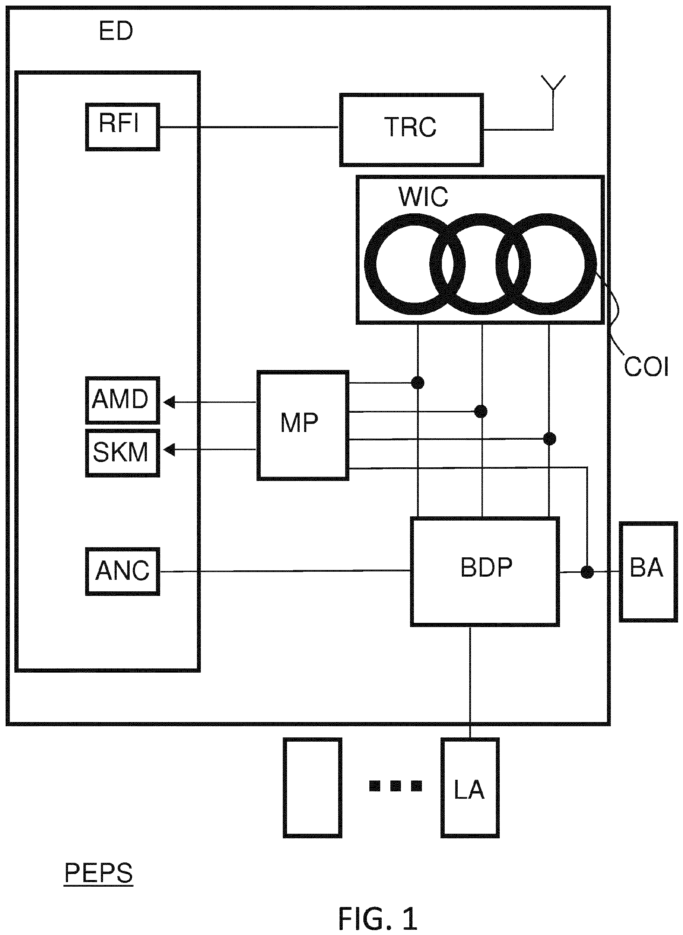

A first embodiment illustrated in figure 1 relates to an electronic device ED that controls the access to a vehicle using a portable identifier and provide power to a portable device inside that vehicle. The electronic devices ED can for instance be connected to an onboard computer in order to operate the access controls or to send further instructions such as starting the engine of the vehicle. This connection can be made using a vehicle bus such like CAN (for Control Area Network). The electronic device ED comprises means for controlling a plurality of external low frequency antennas LA, a radio receiver or a radio transceiver TRC, a wireless charger WIC comprising at least one power transmitting coil COI (in the following, for concision the term coil COI should be understood as power transmitting coil COI). The external low frequency antennas are not part of the electronic device ED according to a first aspect of the invention (hence the term external low frequency antenna) but are controlled by said electronic devices ED. The number of external low frequency antennas is depending on the vehicle configuration, typically between 3 (included) and 7 (included) but actually not limited to 7. Usually, the antennas of the plurality of external low frequency antennas LA are located inside or outside the vehicle as to provide a good space coverage of the vehicle interior to detect occupancies (i.e. a portable identifier located within the vehicle) and a close-range exterior to detect incoming or outgoing Identifier movements. The portable identifier can be a smart key or a portable device having smart key capabilities. The portable device can be a smartphone, a feature phone or any other portable device that can be wirelessly charged. In one embodiment, the radio transceiver TRC is a Bluetooth transceiver. Furthermore, the electronic device ED is configured to operate in at least two mutually exclusive modes.

In a first mode, the electronic device ED is configured to send a high-power signal to a portable identifier using the plurality of external low frequency antennas LA and to exchange data with said portable identifier terminal using the radio receiver TRC and the external low frequency antennas LA or the radio transceiver TRC. In other words, when the device ED comprises a radio receiver TRC, the plurality of external low frequency antennas LA is used to send data to the portable identifier and the data sent by the portable identifier are received by the radio receiver TRC. Furthermore, when the electronic device ED comprises a radio frequency transceiver TRC, at least part of the data is exchanged using the transceiver TRC only. The high-power signal allows the portable identifier to locate itself through low frequency (LF) RSSI (Received Signal Strength Indication) when said portable identifier is in close range, typically ten meters or less. In an embodiment the high-power signal is modulated using a shift keying modulation. For example, the high-power signal can be sent using amplitude shift keying modulation (ASK) or frequency shift keying modulation (FSK). In an embodiment, the frequency of the high-power signal is between 100 kHz and 200 kHz. In one embodiment, the frequency of the high-power signal is equal to 125 kHz. In an embodiment, the frequency used to exchange data with the portable identifier is between 300 and 800 MHz. In an embodiment, the frequency used to exchange data with the portable identifier is equal to 315 MHz, between 433 and 434 MHz or between 767 and 768MHz. In an embodiment, the radio transceiver TRC is a Bluetooth^{®} transceiver and the exchange of data is done through a Bluetooth connection.

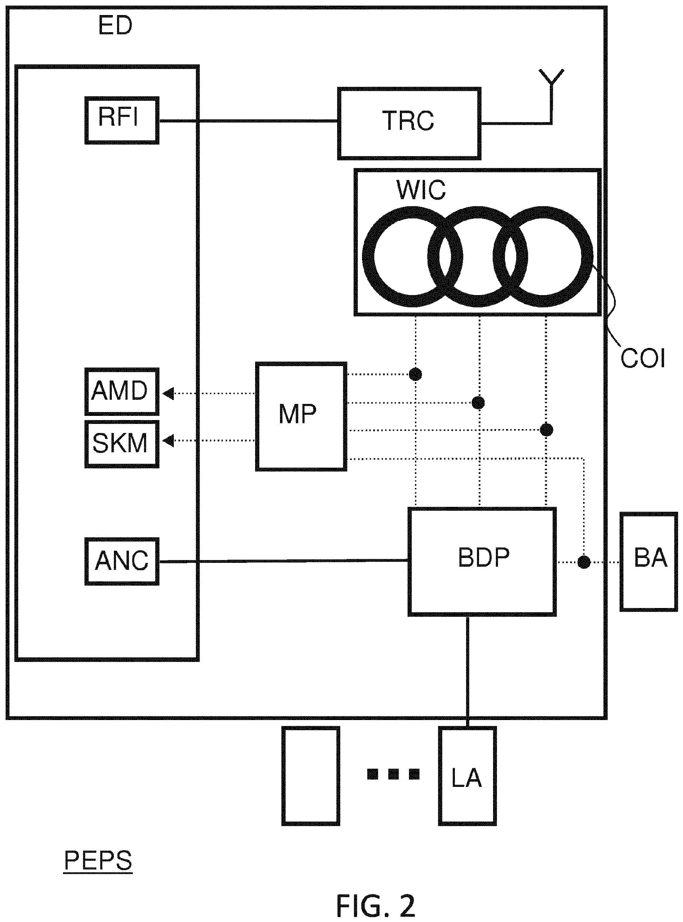

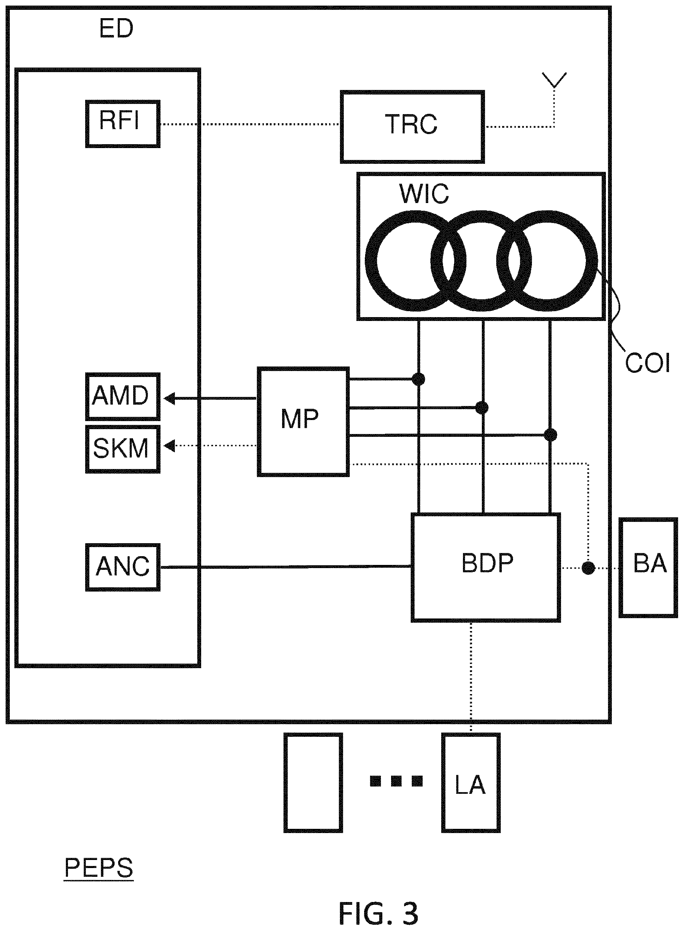

An example of the first mode configuration is illustrated in figure 2. In this example, the electronic device ED comprises an H-bridge demultiplexer BDP. The H-bridge demultiplexer BDP is connected to the low-frequency antenna controller ANC and configured to connect the low-frequency antenna controller ANC to the plurality of external low frequency antennas LA (as illustrated in figure 2) and to connect the low-frequency antenna controller ANC to one of the coils COI of the wireless charger WIC when the electronic device ED is in the second mode (as illustrated in figure 3). Of course, the use of an H-bridge demultiplexer BDP is given here as an example and any means allowing to selectively connect several electronic components can be used. In one embodiment, in order to process the signal received from the radio receiver/transceiver TRC, the electronic device ED comprises a radio frequency interface RFI connected to the radio frequency receiver/transceiver TRC.

In a second mode, the electronic device ED is configured to detect a portable device placed nearby the wireless charger WIC, to exchange data with said portable device and to provide power to said portable device using a low frequency (LF) high-power signal through the wireless charger WIC. In an embodiment, when the electronic device ED is in the second mode, the electronic device ED is configured to send data to the portable device using an FSK modulation and to receive data from the portable device using an amplitude modulation as specified by the Wireless Power Consortium in the Qi Standard. In an embodiment, the signal sent to the portable device has a frequency between 85 kHz and 205 kHz. In an embodiment, the signal sent to the portable device has a frequency between 120 kHz and 135 kHz.

An example of the second mode configuration is illustrated in figure 3. In this example, the electronic device ED comprises an H-bridge demultiplexer BDP. The H-bridge demultiplexer BDP is connected to the low-frequency antenna controller ANC and configured to connect the low-frequency antenna controller ANC to the plurality of external low frequency antennas LA when the electronic device ED is in the first mode (as illustrated in figure 2) and to connect the low-frequency antenna controller ANC to one coil COI of the wireless charger WIC when the electronic device ED is in the second mode (as illustrated in figure 3). Therefore, data and power can be sent by the low-frequency antenna controller ANC to the portable device using one coil COI of the wireless charger WIC. The electronic device ED also comprises a multiplexer MP and a first amplitude demodulator AMD. The multiplexer MP is connected to the coils COIL of the wireless charger WIC and configured to connect, when the electronic device is in the second mode, the coil COIL used to send data to the portable device to the first amplitude demodulator AMD. Of course, the use of an H-bridge demultiplexer BDP or of a multiplexer MP is given here as an example and any means allowing to selectively connect several electronic components can be used. As already mentioned, in these two modes, the signal send to the external low frequency antennas LA or to the wireless charger WIC is a high-power signal which means that currents used are typically over one (1) ampere.

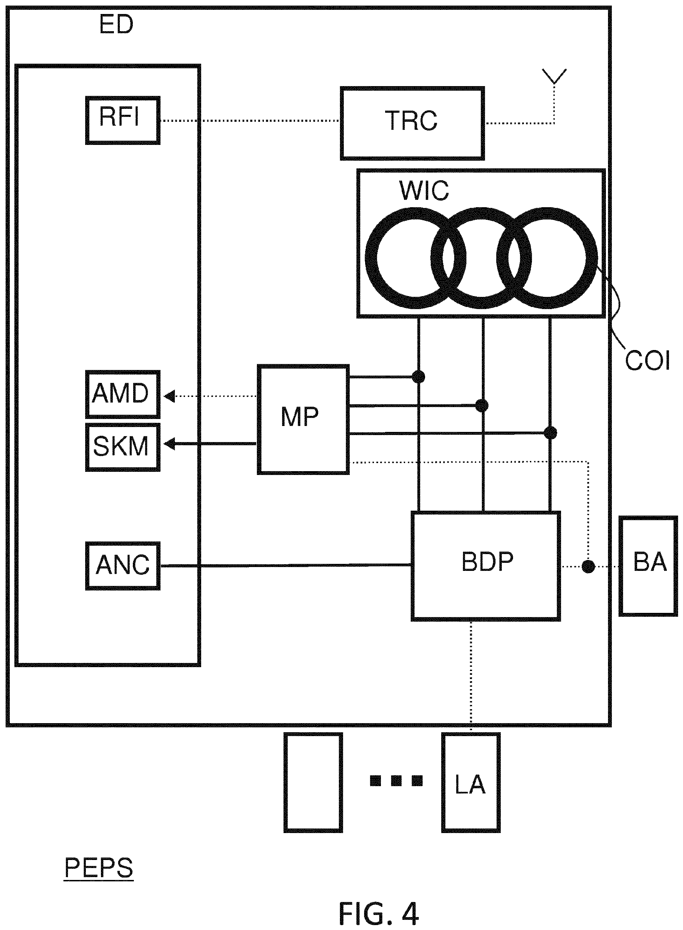

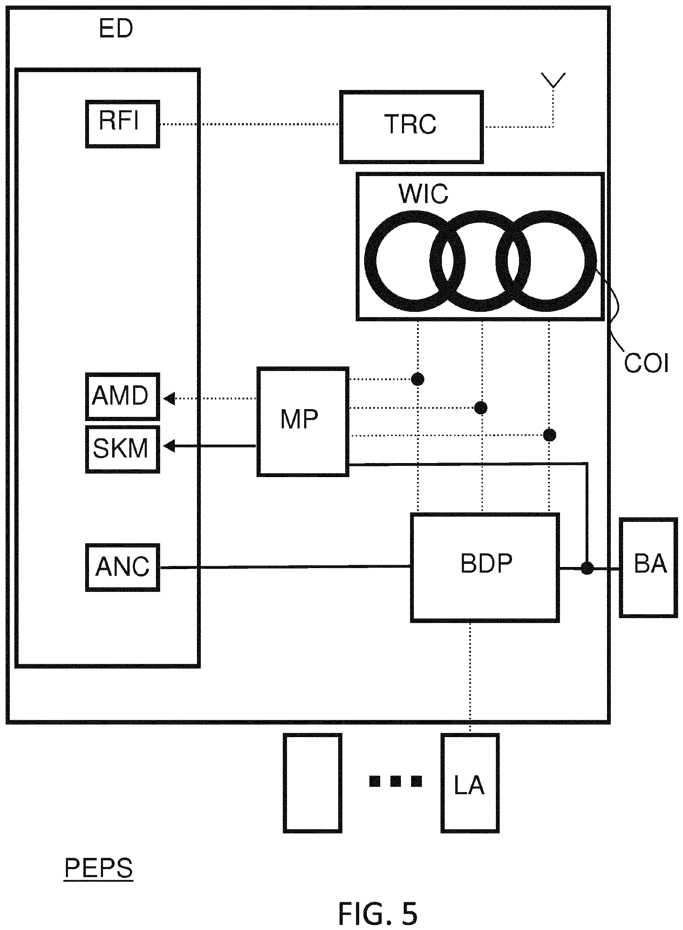

In an embodiment illustrated in figure 4 and figure 5, the electronic device ED is configured to operate in a third mode in which it provides a low-frequency low-power signal to a portable identifier in order to supply energy to the portable identifier and exchanges data with said portable identifier. In an embodiment, the signal is sent and/or received using an amplitude shift keying modulation (ASK).

In an embodiment, the low-frequency and low-power signal is supplied to the portable identifier using one coil COI of the wireless charger WIC. An example of the corresponding configuration is illustrated in figure 4. In this example, the electronic device ED comprises a H-bridge demultiplexer BDP. The H-bridge demultiplexer BDP is connected to the low-frequency antenna controller and configured to connect the low-frequency antenna controller ANC to one of the coils COI of the wireless charger WIC when the electronic device ED is in the third mode. Therefore, data and energy can be radiated by the low-frequency antenna controller ANC to the portable identifier using one coil COI of the wireless charger WIC. The electronic device ED also comprises a multiplexer MP and a second amplitude demodulator, here an amplitude shift keying demodulator SKM. The multiplexer is connected to the coils COI of the wireless charger WIC and configured to connect, when the electronic device is in the third mode, the coil COIL used to send data to the portable identifier to the second amplitude demodulator, here an amplitude shift keying demodulator SKM. In an embodiment, the electronic device ED permanently scans for the presence of a portable identifier in the immediate vicinity of the coils COI. In an embodiment, the electronic device is configured to measure the coils COIL quality factor and to start scanning upon a coil COI quality factor change indicating the presence of a portable identifier (also known as analog pinging in the Qi standard). Hence, in the third mode the external low frequency low-power signal is sent to the portable identifier by the antenna controller ANC using one coil COIL of the wireless charger WIC. Furthermore, the data sent by the portable identifier are received through the coil COIL of the wireless charger WIC by the second amplitude demodulator, here an amplitude shift keying demodulator SKM.

In an embodiment, the electronic device ED comprises means to control an external backup antenna BA and the low-frequency low-power signal is supplied to the portable identifier using the external backup antenna BA. An example of the corresponding configuration is illustrated in figure 5. In this example, the electronic device ED comprises a H-bridge demultiplexer BDP. The H-bridge demultiplexer BDP is connected to the low-frequency antenna controller ANC and configured to connect the low-frequency antenna controller ANC to the external backup antenna BA when the electronic device is in the third mode. Therefore, data and energy can be radiated by the low-frequency antenna controller ANC to the portable identifier using the external backup antenna BA. The electronic device also comprises a multiplexer MP and a second amplitude demodulator, here an amplitude shift keying demodulator SKM. The multiplexer MP is connected to the external backup antenna BA and configured to connect, when the electronic device ED is in the third mode, the external backup antenna BA to the second amplitude demodulator, here an amplitude shift keying demodulator SKM. In an embodiment, the electronic device ED is configured to permanently scan for the presence of a portable identifier in the immediate vicinity of the external backup antenna. Hence, in the third mode the external low frequency low-power signal is sent to the portable identifier by the low-frequency antenna controller ANC using the external backup antenna BA. Furthermore, the data sent by the portable identifier are received through the external backup antenna BA by the second amplitude demodulator, here an amplitude shift keying demodulator SKM.

As already mentioned, in this third mode, the signal sent to the external backup antenna BA or to the wireless charger WIC is a low-power signal which means that currents used are lower than one (1) ampere. Such a low-power signal is suited to communicate with a portable identifier if its battery is fully depleted and no longer able to provide the functionalities associated with the first and second mode. Therefore, in one embodiment, the electronic device ED comprises a controlled power supply configured to provide high-power supply when the electronic device ED is in the first or second mode and to provide low-power supply when the electronic device ED is in the third mode.

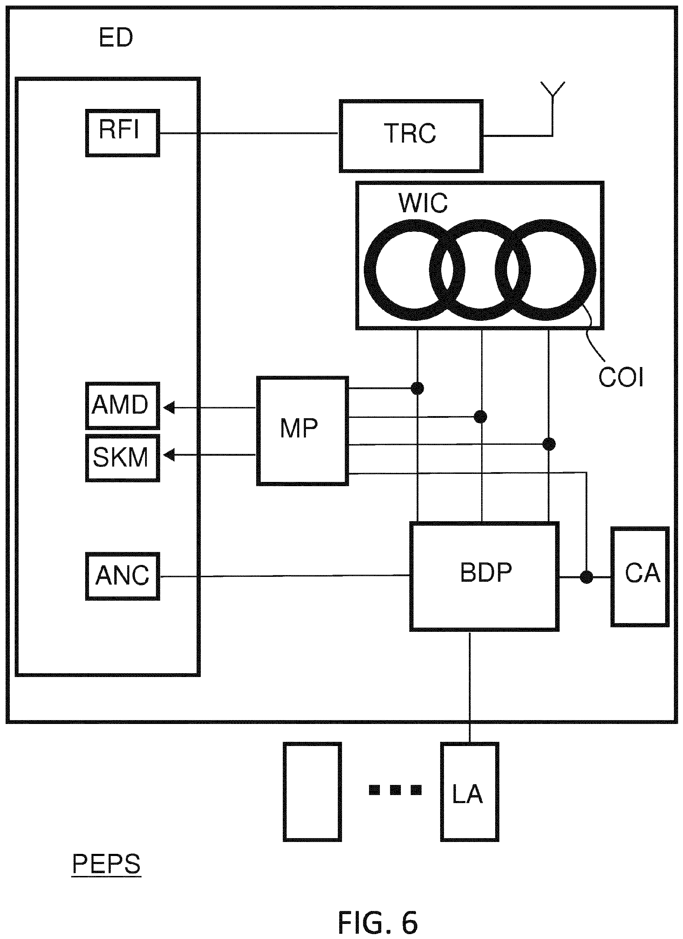

In an embodiment illustrated in figure 6, the electronic device ED integrates a central interior antenna CA. In other words, the wireless charger WIC and the central interior antenna CA are embedded (or integrated) in the same electronic device ED. As noted previously, the external low frequency antennas are not part of the electronic device ED according to a first aspect of the invention (hence the term external low frequency antenna) but are controlled by said electronic devices ED. Furthermore, in this embodiment, electronic device ED is configured to use the central antenna CA in combination with the external low frequency antennas (LA) when in first mode; and to operate in a third modes where the electronic device ED is configured to detect a portable identifier placed nearby the central interior antenna CA, to exchange data with the portable identifier and to provide energy to the portable identifier using a low power signal through the central interior antenna CA. As already mentioned, the three modes are mutually exclusive.

In this embodiment, the electronic device ED, by embedding a central interior antenna CA provides an antenna (i.e. the central interior antenna) inside the vehicle for PEPS functions. Such an integration suppresses the need to place an external low frequency antenna in the dashboard. Furthermore, the central interior antenna CA can also be used as a backup antenna. Overall, the integration of the central interior antenna inside an electronic device ED according to the invention reduces the need in connections and making the integration of the PEPS system inside a vehicle easier.

As already said, the electronic device ED is configured to operate in at least three mutually exclusive modes. In the first mode, the electronic device ED is configured to send a high-power signal to a portable identifier using the plurality of external low frequency antennas LA and the central interior antenna CA, and to exchange data with said portable identifier terminal using the radio frequency receiver TRC or the radio frequency transceiver TRC. In other words, when the device ED comprises a radio frequency receiver TRC, the plurality of external low frequency antennas LA and the central interior antenna CA are used to send data to the portable identifier and the data sent by the portable identifier are received by the radio receiver. Furthermore, when electronic device ED comprises a radio frequency transceiver TRC, at least part of the data is exchanged using the transceiver TRC only. The high-power signal allows the portable identifier to locate itself through RSSI (Received Signal Strength Indication) when said portable identifier is in close range, typically within ten meters of the vehicle or when it is located inside the said vehicle. In an embodiment the high-power signal is modulated using a shift keying modulation. For example, the high-power signal can be sent using amplitude shift keying modulation (ASK) or frequency shift keying modulation (FSK). In an embodiment, the frequency of the high-power signal is between 100 kHz and 200 kHz. In one embodiment, the frequency of the high-power signal is equal to 125 kHz. In an embodiment, the frequency used to exchange data with the portable identifier is between 300 and 800 MHz. In an embodiment, the frequency used to exchange data with the portable identifier is equal to 315 MHz, between 433 and 434 MHz or between 767 and 768MHz. In an embodiment, the radio transceiver TRC is a Bluetooth^{®} transceiver and the exchange of data is done through a Bluetooth paired connection.

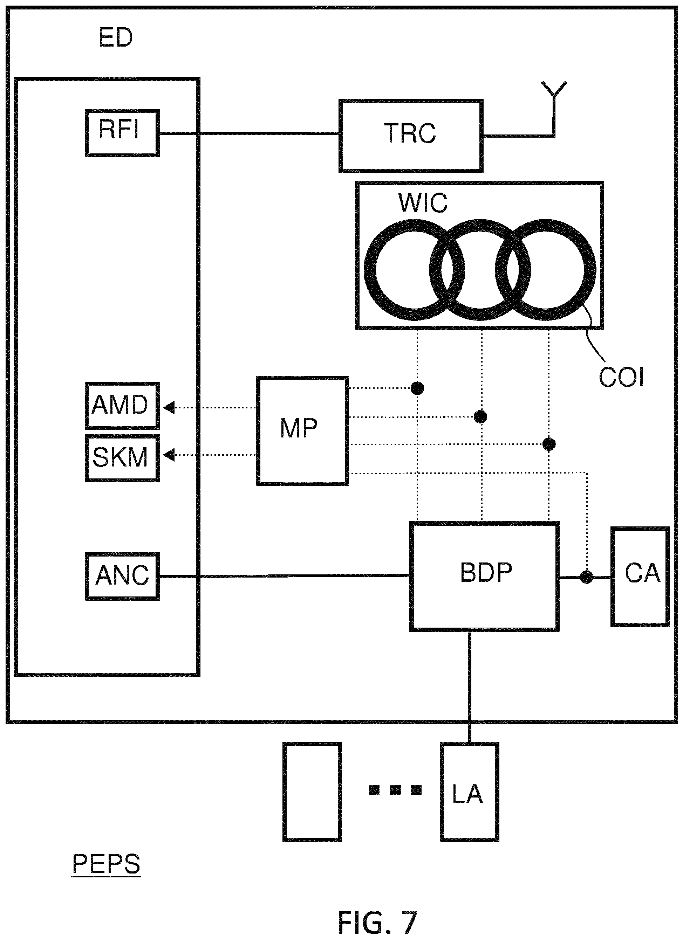

An example of the first mode configuration is illustrated in figure 7. In this example, the electronic device ED comprises an H-bridge demultiplexer BDP. The H-bridge demultiplexer BDP is connected to the low-frequency antenna controller ANC and configured to connect the low-frequency antenna controller ANC to the plurality of external low frequency antennas LA and to the central interior antenna CA when the electronic device is in the first mode. Of course, the use of an H-bridge demultiplexer BDP is given here as an example and any means allowing to selectively connect several low-frequency antennas can be used. In one embodiment, in order to process the signal received from the radio receiver/transceiver TRC, the electronic device ED comprises a radio frequency interface RFI connected to the radio frequency receiver/transceiver TRC.

In the second mode, the electronic device ED is configured to detect a portable device placed nearby the wireless charger WIC, to exchange data with said portable device and to provide power to said portable device using a high-power signal through the wireless charger WIC. In an embodiment, when the electronic device is in the second mode, the electronic device ED is configured to send data to the portable device using an FSK modulation and to receive data from the portable device using an amplitude modulation as specified by the Wireless Power Consortium in the Qi Standard. In an embodiment, the signal sent to the portable device has a frequency between 85 kHz and 205 kHz. In an embodiment, the signal sent to the portable device has a frequency between 120 kHz and 135 kHz.

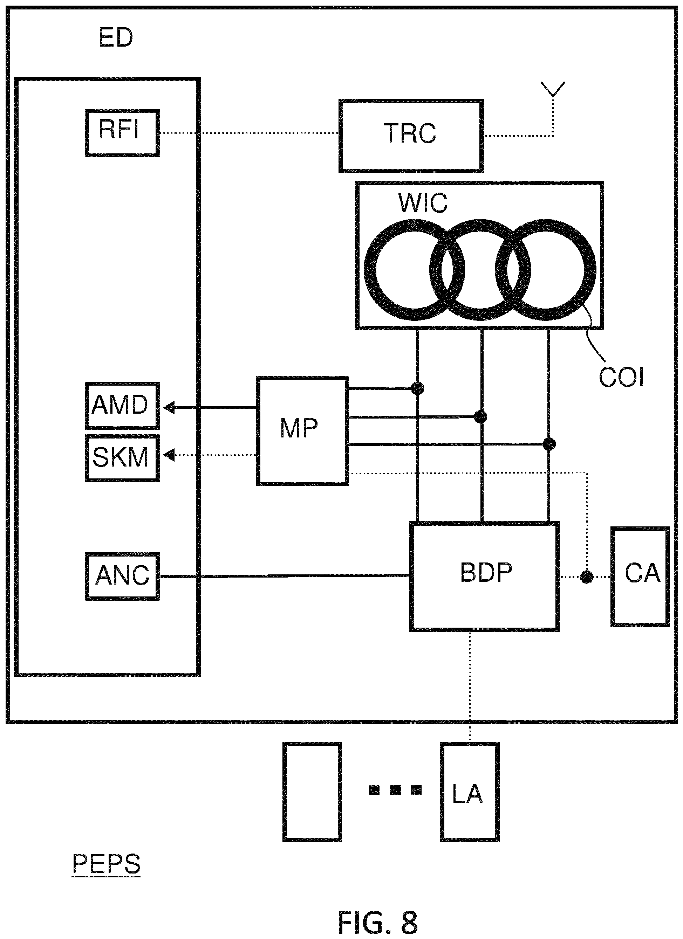

An example of the second mode configuration is illustrated in figure 8. In this example, the electronic device ED comprises an H-bridge demultiplexer BDP. The H-bridge demultiplexer BDP is connected to the low-frequency antenna controller ANC and configured to connect the low-frequency antenna controller ANC to one of the coils COI of the wireless charger WIC when the electronic device is in the third mode. Therefore, data and power can be sent by the low-frequency antenna controller ANC to the portable device using one of the coils COI of the wireless charger WIC. The electronic device ED also comprises a multiplexer MP and a first amplitude demodulator AMD. The multiplexer MP is connected to the coils COIL of the wireless charger WIC and configured to connect, when the electronic device is in the second mode, the coil COIL used to send data to the portable device to the first amplitude demodulator AMD. Of course, the use of an H-bridge demultiplexer BDP or of a multiplexer MP is given here as an example and any means allowing to selectively connect several electronic components can be used.

In a third mode, the electronic device ED is configured to detect a portable identifier placed nearby the central interior antenna CA, to exchange data with the portable identifier and to provide energy to the portable identifier using a low power signal through the central interior antenna CA. In an embodiment, the signal is sent and/or received using an amplitude shift keying modulation (ASK).

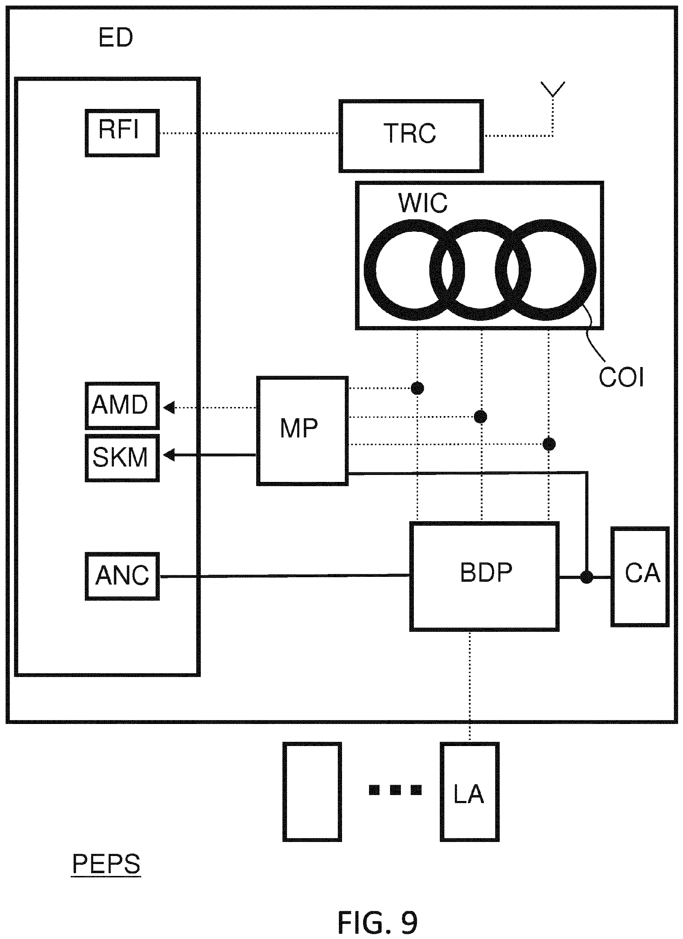

An example of the corresponding configuration is illustrated in figure 9. In this example, the electronic device ED comprises an H-bridge demultiplexer BDP. The H-bridge demultiplexer BDP is connected to the low-frequency antenna controller ANC and configured to connect the low-frequency antenna controller ANC to the central interior antenna CA when the electronic device is in the third mode. Therefore, data and power can be sent by the low-frequency antenna controller ANC to the portable identifier using the central interior antenna CA. The electronic device also comprises a multiplexer MP and a second amplitude demodulator, here an amplitude shift keying demodulator SKM. The multiplexer MP is connected to the central interior antenna CA and configured to connect, when the electronic device ED is in the third mode, the central interior antenna CA to the second amplitude demodulator, here an amplitude shift keying demodulator SKM. In an embodiment, the electronic device ED is configured to scan for the presence of a portable identifier in the immediate vicinity of the central interior antenna CA. Hence, in the third mode the low frequency low-power signal is sent to the portable identifier by the low-frequency antenna controller ANC using the central interior antenna CA. Furthermore, the data sent by the portable identifier are received through the central interior antenna CA by the second amplitude demodulator, here an amplitude shift keying demodulator SKM.

As already mentioned, in the first or the second modes, the signal send to the low-frequency antennas LA, the central interior antenna CA or to the wireless charger WIC is a high-power signal which means that currents used are typically over one (1) ampere. However, such a high-power signal is not suited to communicate with a portable identifier. Hence, in the third mode, the signal send to the central interior antenna CA is a low-power signal which means that currents used are lower than one (1) ampere. Such a low-power signal is suited to communicate with a portable identifier if its battery is fully depleted and no longer able to provide the functionalities associated with the first mode.

Therefore, a switch between high and low power signal must be performed between the first or second mode and the third mode. In order to switch from high power to low power signal, in one embodiment, the electronic device ED comprises means to control a power supply configured to provide high-power supply when the electronic device ED is in the first or second mode and to provide low-power supply when the electronic device ED is in the third mode.

In an embodiment, the electronic device ED comprises a microcontroller configured to manage the two or three operation modes of the system. In an embodiment, the microcontroller controls the H-bridge demultiplexer BDP, the multiplexer MP and/or the controlled power supply in order to switch from the first mode to the second mode or the third mode and vice-versa. In one embodiment, when the electronic device is started, the controller is configured to switch the electronic device into the first mode. In an embodiment, the microcontroller is configured to switch the electronic device ED in the second mode only once the PEPS authentication is completed (and therefore accessory and ignition powers are ON).

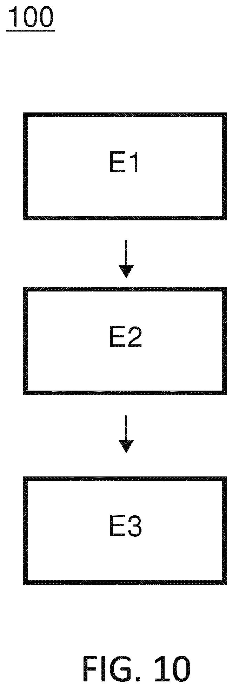

A second embodiment illustrated is the figure 10 relates to a method 100 for operating an electronic device controlling the access to a vehicle and to provide power to a portable device inside that vehicle according to a first aspect of the invention. The method 100 comprises a first step E1 of switching the electronic device ED in the first mode in order to detect and exchange data with a portable identifier. In one embodiment, when started in the first mode, the electronic device ED is configured to be asleep waiting for a wake-up trigger such as a touch detection, for instance on the door of a car. In another embodiment, when started in the first mode, the electronic device ED is configured to scan for portable identifiers in the vicinity of the vehicle. More precisely, in the first mode, the electronic device ED is configured to send high-power low frequency signal to poll and wait for a radio frequency response from a portable identifier. This polling is done by the low-frequency antenna controller ANC using the external plurality of low-frequency antennas LA and, eventually, the central interior antenna CA. Once a portable identifier is in the vicinity of the vehicle equipped with an electronic device ED according to the invention, it responds to the polling using a radio frequency signal with valid credentials. This response is received by the radio receiver/transceiver TRC which is going to interact with the other equipments of the vehicles to unlock the doors. In an embodiment, the communication between the portable identifier and the radio frequency receiver is bidirectional assuming a transceiver rather than a receiver. In another embodiment, the radio frequency communication maybe replaced by a Bluetooth^{®} type of communication.

The method 100 further comprises a second step E2 of authenticating the portable identifier. Once the portable identifier has been correctly authenticated, the electronic device ED can also send commands to the vehicle such as an engine start request.

The method 100 further comprises, when the portable device is positively authenticated, a third step E3 of switching the electronic device into the second mode. Therefore, once the authentication activity has been completed and/or an instruction has been sent, the electronic device ED is configured to operate in the second mode. In the second mode, the electronic device is configured to detect a portable device placed nearby the wireless charger WIC. The electronic device ED is also configured to exchange data with the portable device and to provide power to the portable device using a high-power signal through the wireless charger WIC. This function operation is specified by the Wireless Power Consortium Qi standard. Therefore, once a portable device has been detected, the H-bridge demultiplexer connects the low-frequency antenna controller ANC to one coil COIL of the wireless charger WIC so a signal can be sent to the portable device by the antenna controller ANC. Furthermore, the multiplexer MP connects the same coil COI to the first amplitude demodulator AMD so a signal can be received from the portable device by the first amplitude demodulator AMD. The corresponding instructions can be sent by the microcontroller to the H-bridge demultiplexer BDP and the multiplexer MP.

Note that it would be also possible to detect the presence of a mobile device in its vicinity using a Near Field Communication (NFC) function embedded inside the device ED.

In some cases, however, the authentication cannot be made properly, for instance because the battery of the portable identifier is fully depleted and the communication with the electronic device ED in the first mode is impossible. Usually, the access to the vehicle is done by other means but authentication cannot be made and engine start instructions cannot be sent. To provide a backup solution, the method 100 further comprises, when communication is not possible in the first mode (in that case access to the vehicle is usually granted by exterior means such as a mechanical key), a step of switching the electronic device ED into the third mode. This switch can be performed by the microcontroller. The H-bridge demultiplexer BDP then connects the low-frequency antenna controller ANC to one of the coil COIL of the wireless charger WIC or the external backup antenna BA. The multiplexer MP connects the second amplitude demodulator, here an amplitude shift keying demodulator SKM, to one coil COI of the wireless charger WIC or the external backup antenna BA. Furthermore, the power supply of the antenna controller ANC is switched from high-power to low-power in order not to damage the portable identifier and protect passenger from radiations, for instance using a controlled power supply. Once the switching is effective, the power and the signal can be sent by the antenna controller ANC to the portable identifier using one coil COI of the wireless charger WIC or the external backup antenna BA. Furthermore, the data sent by the portable identifier can be received through the coil COI of the wireless charger WIC or the external backup antenna BA by the second amplitude demodulator, here an amplitude shift keying demodulator SKM.

In another embodiment, when the electronic device ED comprises a central interior antenna CA, the method 100 further comprises, when communication is not possible in the first mode (in that case access to the vehicle is usually granted by exterior means such as a mechanical key), a step of switching the electronic device ED into the third mode. This switch can be performed by the microcontroller. The H-bridge demultiplexer BDP then connects the low-frequency antenna controller ANC to the central interior antenna CA. The multiplexer MP connects the second amplitude demodulator, here an amplitude shift keying demodulator SKM, to the central interior antenna CA. Furthermore, the power supply of the antenna controller ANC is switched from high-power to low-power in order to avoid damaging the portable identifier and protect passenger from radiations, for instance using a controlled power supply. Once the switching is effective, the power and the signal can be sent by the antenna controller ANC to the portable identifier using the central interior antenna CA. Furthermore, the data sent by the portable identifier can be received through the central interior antenna CA by the second amplitude demodulator, here an amplitude shift keying demodulator SKM.

In order to implement such a method 100, in one embodiment, the electronic device ED comprises computing means, for instance a microcontroller, associated with at least one memory. The computing means can be a generic processor, an FPGA or an ASIC. The memory comprises instructions that, when read by the computing means, instructs the electronic components of the electronic device ED according to the first aspect of the invention to perform the steps of the method 100 according to a second aspect of the invention.

In the examples described above, the electronic device has been described has comprising a first AMD and a second SKM amplitude demodulator. However, it is possible to use to replace the two amplitude demodulators AMD,SKM by a unique amplitude demodulator. Furthermore, the second amplitude demodulator has been described in the examples as an amplitude shift keying demodulator SKM. This however just an example and other type of amplitude demodulator can be used.

## Claims

1. Electronic device (ED) for controlling access to a vehicle using a portable identifier and providing power to a portable device inside that vehicle, said electronic device comprising means for controlling a plurality of external low frequency antennas (LA), a radio receiver (TRC) or a radio transceiver (TRC), a wireless charger (WIC) comprising at least one coil (COI), said electronic device (ED) being configured to operate in at least two mutually exclusive modes:
- a first mode where the electronic device (ED) is configured to send a high-power signal to a portable identifier using the plurality of external low frequency antennas (LA) and to exchange data with said portable identifier terminal using the radio receiver (TRC) and the external low frequency antennas (LA) or the transceiver (TRC),
- a second mode where the electronic device (ED) is configured to detect a portable device placed nearby the wireless charger (WIC), to exchange data with the portable device and to provide power to the portable device using a high-power signal through the wireless charger (WIC),
which electronic device comprises a low-frequency antenna controller (ANC) and a H-bridge demultiplexer (BDP), said H-bridge demultiplexer (BDP) being connected to the low-frequency antenna controller (ANC) and configured to connect the low-frequency antenna controller (ANC) to the plurality of low-frequency antennas (LA) when the electronic device (ED) is in the first mode and to connect the low-frequency antenna controller (ANC) to one of the coil (COI) of the wireless charger (WIC) when the electronic device (ED) is in the second mode.

2. Electronic device (ED) according to the preceding claim configured to operate in a third mode in which the electronic device (ED) is configured to provide a low-frequency low-power signal to a portable identifier in order to provide power to the portable identifier and to exchange data with said portable identifier.

3. Electronic device (ED) according to the claim 2 comprising means for controlling an external backup antenna (BA), the low-frequency low-power signal being provided to the portable identifier using the external backup antenna (BA).

4. Electronic device (ED) according to the claim 2 where the low-frequency low-power signal is provided to the portable identifier using one coil (COI) of the wireless charger (WIC).

5. Electronic device according to the claim 1 **characterized in that** the electronic device comprises a central interior antenna(CA), said electronic device (ED) being configure to use the central antenna (CA) in combination with the external low frequency antennas (LA) when in first mode; and to operate in a third modes where the electronic device (ED) is configured to detect a portable identifier placed nearby the central interior antenna (CA), to exchange data with the portable identifier and to provide power to the portable identifier using a low power signal through the central interior antenna (CA); the three mode being mutually exclusive.

6. Electronic device (ED) according to one of the preceding claims where, when the electronic device (ED) is in the first mode or the third mode, the electronic device (ED) is configured to send and/or receive signals using a shift keying modulation.

7. Electronic device (ED) according to the preceding claim where, when the electronic device (ED) is in the third mode, the electronic device (ED) is configured to send data to the portable device using an ASK modulation and to receive data from the portable device using an AM modulation.

8. Electronic device (ED) according to one of the preceding claims where, when the electronic device (ED) is in the second mode, the electronic device (ED) is configured to send data to the portable device using an FSK modulation and to receive data from the portable device using an amplitude modulation.

9. Passive entry passive start system (PEPS) comprising a plurality of external low frequency antenna (LA) and an electronic device (ED) according to one of the preceding claims, said electronic device (ED) being connected to the plurality of external low frequency antenna (LA).

10. Method (100) for operating an electronic device (ED) according to one of the claims 1 to 8 or a passive entry passive start system (PEPS) according to the preceding claim comprising:
- a first step (E1) of switching the electronic device in the first mode in order to detect and exchange data with a portable identifier;
- a second step (E2) of authenticating the portable identifier;
- when the portable identifier is positively authenticated, a third step (E3) of switching the electronic device (ED) into the second mode.

11. Method according to the preceding claim comprising, when communication with the portable identifier is not possible in the first mode, a step of switching the electronic device into the third mode.

12. A computer program comprising instructions to cause the electronic device (ED) of claim 1 to 8 or the passive entry passive start system (PEPS) according to the claim 9 to execute the steps of the method (100) of claim 10 or claim 11.

13. A computer-readable medium having stored thereon the computer program of claim 12.

## Patentansprüche

1. Elektronische Vorrichtung (ED) zur Steuerung des Zugangs zu einem Fahrzeug unter Verwendung einer tragbaren Kennung und zur Versorgung einer tragbaren Vorrichtung im Inneren des Fahrzeugs, wobei die elektronische Vorrichtung Mittel zur Steuerung mehrerer externer Niederfrequenzantennen (LA), einen Funkempfänger (TRC) oder einen Funksendeempfänger (TRC), ein drahtloses Ladegerät (WIC) mit mindestens einer Spule (COI) umfasst, wobei die elektronische Vorrichtung (ED) so konfiguriert ist, dass sie in mindestens zwei sich gegenseitig ausschließenden Betriebsarten arbeitet:
- einen ersten Modus, in dem die elektronische Vorrichtung (ED) so konfiguriert ist, dass sie unter Verwendung der mehreren externen Niederfrequenzantennen (LA) ein Hochleistungssignal an ein tragbares Identifizierungsgerät sendet und unter Verwendung des Funkempfängers (TRC) und der externen Niederfrequenzantennen (LA) oder des Sendeempfängers (TRC) Daten mit dem tragbaren Identifizierungsgerät austauscht;
- einen zweiten Modus, in dem das elektronische Gerät (ED) so konfiguriert ist, dass es ein tragbares Gerät erkennt, das sich in der Nähe des drahtlosen Ladegeräts (WIC) befindet, um Daten mit dem tragbaren Gerät auszutauschen und das tragbare Gerät unter Verwendung eines Hochleistungssignals über das drahtlose Ladegerät (WIC) mit Energie zu versorgen,
wobei die elektronische Vorrichtung eine Niederfrequenz-Antennensteuerung (ANC) und einen H-Brücken-Demultiplexer (BDP) umfasst, wobei der H-Brücken-Demultiplexer (BDP) mit der Niederfrequenz-Antennensteuerung (ANC) verbunden ist und so konfiguriert ist, dass er die Niederfrequenz-Antennensteuerung (ANC) mit der Mehrzahl von Niederfrequenz-Antennen (LA) verbindet, wenn sich die elektronische Vorrichtung (ED) im ersten Modus befindet, und die Niederfrequenz-Antennensteuerung (ANC) mit einer der Spulen (COI) des drahtlosen Ladegeräts (WIC) verbindet, wenn sich die elektronische Vorrichtung (ED) im zweiten Modus befindet.

2. Elektronische Vorrichtung (ED) nach dem vorhergehenden Anspruch, die so konfiguriert ist, dass sie in einem dritten Modus arbeitet, in dem die elektronische Vorrichtung (ED) so konfiguriert ist, dass sie ein Niederfrequenzsignal mit niedriger Leistung an eine tragbare Kennung liefert, um die tragbare Kennung mit Energie zu versorgen und Daten mit der tragbaren Kennung auszutauschen.

3. Elektronisches Gerät (ED) nach Anspruch 2, das Mittel zur Steuerung einer externen Backup-Antenne (BA) umfasst, wobei das Niederfrequenzsignal mit niedriger Leistung über die externe Backup-Antenne (BA) an den tragbaren Identifikator geliefert wird.

4. Elektronisches Gerät (ED) nach Anspruch 2, bei dem das Niederfrequenzsignal mit niedriger Leistung über eine Spule (COI) des drahtlosen Ladegeräts (WIC) an den tragbaren Identifikator geliefert wird.

5. Elektronische Vorrichtung nach Anspruch 1, **dadurch gekennzeichnet, dass** die elektronische Vorrichtung eine zentrale Innenantenne (CA) umfasst, wobei die elektronische Vorrichtung (ED) so konfiguriert ist, dass sie die zentrale Antenne (CA) in Kombination mit den externen Niederfrequenzantennen (LA) verwendet, wenn sie sich in der ersten Betriebsart befindet; und dass sie in einer dritten Betriebsart arbeitet, in der die elektronische Vorrichtung (ED) so konfiguriert ist, dass sie eine in der Nähe der zentralen Innenantenne (CA) platzierte tragbare Kennung erkennt, Daten mit der tragbaren Kennung austauscht und die tragbare Kennung unter Verwendung eines Niederleistungssignals über die zentrale Innenantenne (CA) mit Strom versorgt; wobei die drei Betriebsarten sich gegenseitig ausschließen.

6. Elektronische Vorrichtung (ED) nach einem der vorhergehenden Ansprüche, wobei die elektronische Vorrichtung (ED), wenn sie sich im ersten Modus oder im dritten Modus befindet, so konfiguriert ist, dass sie Signale unter Verwendung einer Umtastungsmodulation sendet und/oder empfängt.

7. Elektronische Vorrichtung (ED) nach dem vorhergehenden Anspruch, wobei, wenn sich die elektronische Vorrichtung (ED) im dritten Modus befindet, die elektronische Vorrichtung (ED) so konfiguriert ist, dass sie Daten unter Verwendung einer ASK-Modulation an die tragbare Vorrichtung sendet und Daten unter Verwendung einer AM-Modulation von der tragbaren Vorrichtung empfängt.

8. Elektronische Vorrichtung (ED) nach einem der vorhergehenden Ansprüche, wobei die elektronische Vorrichtung (ED), wenn sie sich im zweiten Modus befindet, so konfiguriert ist, dass sie Daten unter Verwendung einer FSK-Modulation an die tragbare Vorrichtung sendet und Daten unter Verwendung einer Amplitudenmodulation von der tragbaren Vorrichtung empfängt.

9. Passives Einstiegs-Passivstartsystem (PEPS) mit mehreren externen Niederfrequenzantennen (LA) und einer elektronischen Vorrichtung (ED) nach einem der vorhergehenden Ansprüche, wobei die elektronische Vorrichtung (ED) mit den mehreren externen Niederfrequenzantennen (LA) verbunden ist.

10. Verfahren (100) zum Betreiben einer elektronischen Vorrichtung (ED) nach einem der Ansprüche 1 bis 8 oder eines Passive-Entry-Passive-Start-Systems (PEPS) nach dem vorhergehenden Anspruch, umfassend:
- einen ersten Schritt (E1) des Umschaltens des elektronischen Geräts in den ersten Modus, um Daten mit einer tragbaren Kennung zu erfassen und auszutauschen;
- einen zweiten Schritt (E2) der Authentifizierung des tragbaren Identifikators;
- wenn der tragbare Identifikator positiv authentifiziert ist, einen dritten Schritt (E3) des Umschaltens des elektronischen Geräts (ED) in den zweiten Modus.

11. Verfahren nach dem vorhergehenden Anspruch, das, wenn die Kommunikation mit der tragbaren Kennung im ersten Modus nicht möglich ist, einen Schritt des Umschaltens der elektronischen Vorrichtung in den dritten Modus umfasst.

12. Computerprogramm, das Anweisungen enthält, um die elektronische Vorrichtung (ED) nach Anspruch 1 bis 8 oder das Passive Entry Passive Start System (PEPS) nach Anspruch 9 zu veranlassen, die Schritte des Verfahrens (100) nach Anspruch 10 oder 11 auszuführen.

13. Ein computerlesbares Medium, auf dem das Computerprogramm nach Anspruch 12 gespeichert ist.

## Revendications

1. Dispositif électronique (ED) permettant de contrôler l'accès à un véhicule à l'aide d'un identifiant portable et d'alimenter un dispositif portable à l'intérieur de ce véhicule, ledit dispositif électronique comprenant des moyens de contrôle d'une pluralité d'antennes externes à basse fréquence (LA), un récepteur radio (TRC) ou un émetteur-récepteur radio (TRC), un chargeur sans fil (WIC) comprenant au moins une bobine (COI), ledit dispositif électronique (ED) étant configuré pour fonctionner dans au moins deux modes s'excluant mutuellement :
- un premier mode dans lequel le dispositif électronique (ED) est configuré pour envoyer un signal de forte puissance à un identificateur portable à l'aide de la pluralité d'antennes basse fréquence externes (LA) et pour échanger des données avec ledit terminal d'identificateur portable à l'aide du récepteur radio (TRC) et des antennes basse fréquence externes (LA) ou de l'émetteur-récepteur (TRC) ;
- un second mode dans lequel le dispositif électronique (ED) est configuré pour détecter un dispositif portable placé à proximité du chargeur sans fil (WIC), pour échanger des données avec le dispositif portable et pour alimenter le dispositif portable à l'aide d'un signal de forte puissance via le chargeur sans fil (WIC),
lequel dispositif électronique comprend un contrôleur d'antenne basse fréquence (ANC) et un démultiplexeur à pont en H (BDP), ledit démultiplexeur en pont H (BDP) étant connecté au contrôleur d'antenne basse fréquence (ANC) et configuré pour connecter le contrôleur d'antenne basse fréquence (ANC) à la pluralité d'antennes basse fréquence (LA) lorsque le dispositif électronique (ED) est dans le premier mode et pour connecter le contrôleur d'antenne basse fréquence (ANC) à l'une des bobines (COI) du chargeur sans fil (WIC) lorsque le dispositif électronique (ED) est dans le second mode.

2. Dispositif électronique (DE) selon la revendication précédente configuré pour fonctionner dans un troisième mode dans lequel le dispositif électronique (DE) est configuré pour fournir un signal basse fréquence de faible puissance à un identificateur portable afin d'alimenter l'identificateur portable et d'échanger des données avec ledit identificateur portable.

3. Dispositif électronique (ED) selon la revendication 2, comprenant des moyens de commande d'une antenne de secours externe (BA), le signal basse fréquence de faible puissance étant fourni à l'identificateur portable à l'aide de l'antenne de secours externe (BA).

4. Dispositif électronique (DE) selon la revendication 2, où le signal basse fréquence de faible puissance est fourni à l'identificateur portable à l'aide d'une bobine (COI) du chargeur sans fil (WIC).

5. Dispositif électronique selon la revendication 1 **caractérisé en ce que** le dispositif électronique comprend une antenne intérieure centrale (CA), ledit dispositif électronique (ED) étant configuré pour utiliser l'antenne centrale (CA) en combinaison avec les antennes basse fréquence externes (LA) dans le premier mode ; et pour fonctionner dans un troisième mode où le dispositif électronique (ED) est configuré pour détecter un identificateur portable placé à proximité de l'antenne intérieure centrale (CA), pour échanger des données avec l'identificateur portable et pour alimenter l'identificateur portable à l'aide d'un signal de faible puissance par l'intermédiaire de l'antenne intérieure centrale (CA) ; les trois modes s'excluant mutuellement.

6. Dispositif électronique (ED) selon l'une des revendications précédentes où, lorsque le dispositif électronique (ED) est dans le premier mode ou le troisième mode, le dispositif électronique (ED) est configuré pour envoyer et/ou recevoir des signaux en utilisant une modulation par incrémentation.

7. Dispositif électronique (ED) selon la revendication précédente où, lorsque le dispositif électronique (ED) est dans le troisième mode, le dispositif électronique (ED) est configuré pour envoyer des données au dispositif portable en utilisant une modulation ASK et pour recevoir des données du dispositif portable en utilisant une modulation AM.

8. Dispositif électronique (ED) selon l'une des revendications précédentes où, lorsque le dispositif électronique (ED) est dans le second mode, le dispositif électronique (ED) est configuré pour envoyer des données au dispositif portable en utilisant une modulation FSK et pour recevoir des données du dispositif portable en utilisant une modulation d'amplitude.

9. Système de démarrage passif à l'entrée (PEPS) comprenant une pluralité d'antennes basses fréquences externes (LA) et un dispositif électronique (ED) selon l'une des revendications précédentes, ledit dispositif électronique (ED) étant connecté à la pluralité d'antennes basses fréquences externes (LA).

10. Procédé (100) de fonctionnement d'un dispositif électronique (DE) selon l'une des revendications 1 à 8 ou d'un système de démarrage passif d'entrée (PEPS) selon la revendication précédente comprenant :
- une première étape (E1) consistant à faire passer le dispositif électronique dans le premier mode afin de détecter un identificateur portable et d'échanger des données avec lui ;
- une deuxième étape (E2) consistant à authentifier l'identificateur portable ;
- lorsque l'identificateur portable est positivement authentifié, une troisième étape (E3) consistant à faire passer le dispositif électronique (ED) dans le deuxième mode.

11. Procédé selon la revendication précédente comprenant, lorsque la communication avec l'identificateur portable n'est pas possible dans le premier mode, une étape consistant à faire passer le dispositif électronique dans le troisième mode.

12. Programme d'ordinateur comprenant des instructions pour que le dispositif électronique (ED) des revendications 1 à 8 ou le système d'entrée passive (PEPS) selon la revendication 9 exécute les étapes de la méthode (100) de la revendication 10 ou de la revendication 11.

13. Support lisible par ordinateur sur lequel est stocké le programme informatique de la revendication 12.
